# EUROPÄISCHE PATENTSCHRIFT

(11) **EP 0 793 531 B1**
(45) Veröffentlichungstag und Bekanntmachung des Hinweises auf die Patenterteilung: **20.05.1998**
(21) Anmeldenummer: 95941005.1
(22) Anmeldetag: 23.11.1995
(51) Int. Cl.: B01J 19/12, C08J 3/28

(54) **VERFAHREN ZUM CHEMISCHEN MODIFIZIEREN VON ALKYLGRUPPENHALTIGEN FESTSTOFFEN**
PROCESS FOR CHEMICALLY MODIFYING SOLIDS CONTAINING ALKYL GROUPS
PROCEDE DE MODIFICATION CHIMIQUE DE SOLIDES CONTENANT DES GROUPES ALKYLE

(30) Priorität: 24.11.1994 DE 4443240
(43) Veröffentlichungstag der Anmeldung: 10.09.1997
(73) Patentinhaber: ARPLAS Gesellschaft für Plasmatechnologie mbH, 06369 Weissandt-Gölzau (DE)
(72) Erfinder: BERGER, Steffen, D-40625 Düsseldorf (DE)
(74) Vertreter: Schneider, Henry
(86) Internationale Anmeldenummer: EP9504621
(87) Internationale Veröffentlichungsnummer: WO9615853

(56) Entgegenhaltungen:
- EP-A- 0 122 289
- EP-A- 0 593 988
- WO-A-95/03344
- DE-A- 4 141 805
- GB-A- 1 326 197
- PATENT ABSTRACTS OF JAPAN vol. 10 no. 235 (C-366) ,14.August 1986 & JP,A,61 069804 (HITACHI LTD.) 10.April 1986, & DATABASE WPI Section Ch, Week 8621 Derwent Publications Ltd., London, GB; Class A10, AN 86-133839 & JP,A,61 069 804 (HITACHI K.K.) , 10.April 1986
- CHEMICAL ABSTRACTS, vol. 81, no. 6, 12.August 1974 Columbus, Ohio, US; abstract no. 26473d, T.KAGIYA & M. HAGIWARA 'Poly(tetrafluoroethylene) resin wax' Seite 41; Spalte R; & JP,A,48 078 252 (JAPAN ATOMIC ENERGY RESEARCH INSTITUTE ) 20.Oktober 1973

## Beschreibung

Die Erfindung betrifft ein Verfahren zum chemischen Modifizieren von alkylgruppenhaltigen Feststoffen und chemisch modifizierte alkylgruppenhaltige Feststoffe.

Es ist bekannt, daß alkygruppenhaltige Feststoffe, beispielsweise Polyolefine und Wachse, auf vielen Gebieten eingesetzt werden können. Der Einsatz ist beispielsweise als Beschichtungsmaterialien, Schmelzkleber usw. möglich. Für die Verarbeitbarkeit der alkylgruppenhaltigen Feststoffe auf den unterschiedlichsten Einsatzgebieten müssen diese mit bestimmten, auf das jeweilige Einsatzgebiet abgestimmten Zusätzen abgemischt werden. Auf Grund der Vielzahl der möglichen Anwendungsgebiete ist ein umfassender einheitlicher Einsatz der alkylgruppenhaltigen Feststoffe somit nicht möglich.

Aus Kunststoff-Taschenbuch, 25. Ausgabe, Seite 248 bis 259, ist ein Verfahren zur Nachbehandlung von alkylgruppenhaltigen Feststoffen bekannt. Hierbei wird die Oberfläche des alkylgruppenhaltigen Feststoffes, beispielsweise eine PE-Oberfläche, mittels eines Hochspannungsplasmas behandelt, um eine lokale chemische Modifizierung zu erreichen. Auf Grund dieser lokalen Oberflächenbehandlung, beispielsweise bei Formteilen, wird eine Verbesserung der Lackierbarkeit beziehungsweise Bedruckbarkeit erreicht. Hierbei ist jedoch nachteilig, daR eine zusätzliche Nachbehandlung erfolgen muß, deren Anwendung auf Grund der Bereitstellung einer Hochspannungs-Plasmaanlage für das fertige Erzeugnis nur im begrenzten Umfang möglich ist.

Der Erfindung liegt daher die Aufgabe zugrunde, ein Verfahren der gattungsgemäßen Art zu schaffen, mit dem in einfacher und kostengünstiger Weise eine chemische Modifizierung von alkylgruppenhaltigen Feststoffen möglich ist.

Erfindungsgemäß wird diese Aufgabe dadurch gelöst, daß die alkylgruppenhaltigen Feststoffe auf Temperaturen oberhalb ihres Schmelzpunktes erwärmt und einer Plasmabehandlung in einem Frequenzbereich von 10 kHz bis 10 GHz unterzogen werden. Es wurde überraschenderweise gefunden, daß durch die Überführung der alkylgruppenhaltigen Feststoffe in eine Schmelze und deren Plasmabehandlung innerhalb der alkylgruppenhaltigen Feststoffe gezielt eine Veränderung von Materialeigenschaften herbeiführbar ist. Durch die Überführung in die Schmelze läßt sich eine qualitativ und quantitativ höherwertige chemische Modifizierung erreichen. Insbesondere lassen sich durch die Plasmabehandlung der Schmelze der alkylgruppenhaltigen Feststoffe chemische Spezialprodukte erzielen, die auf vielfältige Weise eingesetzt werden können, ohne daß es einer nochmaligen aufwendigen Nachbehandlung bedarf. Ein Grad der chemischen Modifizierung der alkylgruppenhaltigen Feststoffe läßt sich in einfacher Weise vorzugsweise durch eine Einstellung einer Viskosität der Schmelze und/oder von Parametern der Plasmabehandlung erreichen.

In vorteilhafter Ausgestaltung der Erfindung ist vorgesehen, daß die Plasmabehandlung mit wechselnden Frequenzen, vorzugsweise mit Kombinationen verschieden hoher, wechselnder Frequenzen durchgeführt wird. So kann sehr vorteilhaft die Plasmabehandlung mit nacheinander zuschaltbaren Frequenzen, mit abwechselnd zuschaltbaren, unterschiedlich hohen Frequenzen, mit wenigstens zwei gleichzeitig zuschaltbaren, verschieden hohen Frequenzen, und sich hieraus ergebenden Kombinationen an Frequenzenzuschaltungen durchgeführt werden. Hierdurch kann die chemische Modifizierung sehr vorteilhaft auf den unterschiedlichen chemischen Aufbau der eingesetzten alkylgruppenhaltigen Feststoffe sowie deren Verwendungszweck nach der chemischen Modifizierung abgestimmt werden.

In weiterer vorteilhafter Ausgestaltung der Erfindung ist vorgesehen, daß die Plasmabehandlung unter Zufuhr wenigstens eines Inertgases, beispielsweise Helium und/oder Argon, und/oder unter Zufuhr wenigstens eines Reaktionsgases, beispielsweise Sauerstoff und/oder Stickstoff, durchgeführt wird. Weiterhin bevorzugt ist, wenn die Plasmabehandlung nacheinander mit einem Inertgasplasma und wenigstens einem Reaktionsgasplasma und/oder einem Reaktionsgasplasmagemisch oder unter Zufuhr eines Gemisches aus wenigstens einem Inertgas und einem Reaktionsgas durchgeführt wird. Durch Auswahl einer auf die zu modifizierenden alkylgruppenhaltigen Feststoffe abgestimmten Zusammensetzung des Prozeßgases während der Plasmabehandlung (Inertgas, Reaktionsgas, Reaktionsgasgemisch) ist es möglich, in die alkylgruppenhaltige Schmelze der Feststoffe die zur chemischen Modifizierung erforderlichen reaktiven Gruppen, beispielsweise Hydroxylgruppen, Karboxylgruppen, primäre und sekundäre Aminogruppen, in ausreichendem Maße einzubauen. Diese eingebauten Gruppen sind in der Lage, mit dem alkylgruppenhaltigen Feststoff zu reagieren und chemische Bindungen einzugehen und/oder physikalisch zu haften. Weitere einbaubare polare, aber nicht reaktive Gruppen, beispielsweise Karbonylgruppen, tertiäre Aminogruppen, können ebenfalls eine Eigenschaftsänderung der alkylgruppenhaltigen Feststoffe bewirken. Durch Überführung der alkylgruppenhaltigen Feststoffe in die Schmelze ist eine relativ homogene Modifizierung der alkylgruppenhaltigen Feststoffe mit den während der Plasmabehandlung eingebauten reaktiven beziehungsweise nichtreaktiven Gruppen möglich.

Die nach der Plasmabehandlung erstarrte Schmelze besitzt somit eine relativ homogene Verteilung der eingebrachten reaktiven beziehungsweise nichtreaktiven Gruppen über die gesamte Raumausdehnung des alkylgruppenhaltigen Feststoffes. Es sind somit alkylgruppenhaltige Feststoffe jeglicher Art erzielbar, die nach der Plasmabehandlung für bestimmte Anwendungsfälle geeignet sind, wobei eine weitere nachfolgende Behandlung nicht mehr notwendig ist. Die Einstellung der alkylgruppenhaltigen Feststoffe auf ihren spezialen Anwendungsfall kann in einfacher Weise durch die erfindungsgemäße Plasmabehandlung einer Schmelze der alkylgruppenhaltigen Feststoffe erfolgen.

In weiterer vorteilhafter Ausgestaltung der Erfindung ist vorgesehen, daß den alkylgruppenhaltigen Feststoffen vor der Plasmabehandlung feste und/oder flüssige Reaktanten, Hilfs- und Zuschlagstoffe beigemischt werden. Die festen und/oder flüssigen Reaktanten, Hilfs- und Zuschlagstoffe können vorzugsweise auch der Schmelze der alkylgruppenhaltigen Feststoffe beigemischt werden. Durch dieses wahlweise Zumischen der erwähnten Reaktanten beziehungsweise Stoffe kann die chemische Modifizierung der alkylgruppenhaltigen Feststoffe genau abgestimmt auf einen bestimmten Anwendungsfall erfolgen.

Weiterhin ist vorteilhaft, wenn die Überführung der alkylgruppenhaltigen Feststoffe in die Schmelze vor der Plasmabehandlung erfolgt. Hierdurch kann die Schmelze separat erzeugt, gegebenenfalls mit den Reaktanten beziehungsweise Hilfs- und Zuschlagstoffen versetzt werden und anschließend der Plasmabehandlung unterzogen werden. Somit können die Verfahrensschritte der Erzeugung der Schmelze der alkylgruppenhaltigen Feststoffe und der Plasmabehandlung getrennt, das heißt aufeinanderfolgend durchgeführt werden, wobei jeder der beiden Verfahrensschritte für sich genommen optimiert, das heißt auf den speziellen alkylgruppenhaltigen Feststoff abgestimmt werden kann. Hierdurch werden gegenseitige Beeinflussungen der beiden Verfahrensschritte weitgehend vermieden. Insbesondere ist dies vorteilhaft, wenn die alkylgruppenhaltigen Feststoffe unterschiedliche Schmelzpunkte aufweisen oder eine unterschiedliche Viskosität der Schmelze eingestellt werden soll. Darüber hinaus kann die Anlage zur Durchführung der Plasmabehandlung von den Einrichtungen zur Erzeugung der Schmelze freigehalten werden, so daß diese variabler einsetzbar ist.

Im Sinne der Erfindung ist jedoch auch, daß die Schmelze der alkylgruppenhaltigen Feststoffe während der Plasmabehandlung, das heißt also zeitgleich, erzeugt wird. Hierdurch wird es möglich, mit der Plasmabehandlung, das heißt der chemischen Modifizierung der alkylgruppenhaltigen Feststoffe zu beginnen, bevor diese vollständig über ihre Schmelztemperatur erwärmt wurden. Hierdurch wird es vorteilhaft möglich, den Verfahrensschritt des Überganges der alkylgruppenhaltigen Feststoffe in ihre Schmelze zu einem Zeitpunkt zu stoppen, in dem noch nicht die gesamten alkylgruppenhaltigen Feststoffe verflüssigt sind. Somit kann der Einbau der reaktiven beziehungsweise nichtreaktiven Gruppen mittels der Plasmabehandlung in die alkylgruppenhaltigen Feststoffe mit unterschiedlicher Intensität in verschiedenen Raumbereichen des alkylgruppenhaltigen Feststoffes erfolgen. Somit lassen sich nach Erstarren der Schmelze alkylgruppenhaltige Feststoffe erzielen, die eine bereichsweise unterschiedliche chemische Modifizierung erfahren haben.

Weitere vorteilhafte Ausgestaltungen ergeben sich aus den übrigen, in den Unteransprüchen genannten Merkmalen.

Die Erfindung wird nachfolgend in Ausführungsbeispielen an Hand der zugehörigen Zeichnungen näher erläutert. Es zeigen:
- Figur 1: einen Verfahrensablauf zur chemischen Modifizierung eines alkylgruppenhaltigen Feststoffes und
- Figur 2: eine schematische Darstellung einer Anordnung zur Durchführung des Verfahrens.

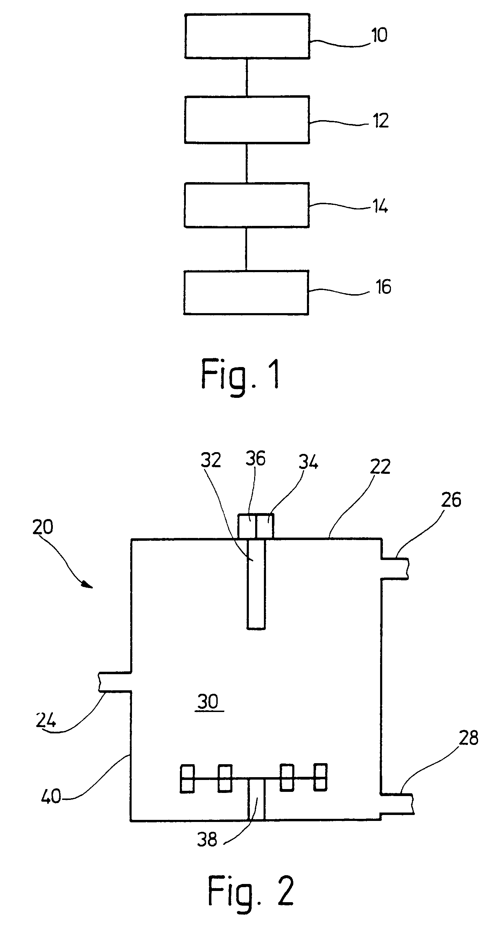

In der Figur 1 soll das erfindungsgemäße Verfahren mit Hilfe eines Diagrammes verdeutlicht werden. In einem ersten Schritt werden als Ausgangsmaterialien zur Verfügung stehende alkylgruppenhaltige Feststoffe vorbereitet. Die alkylgruppenhaltigen Feststoffe können sowohl in Pulver- oder Granulatform oder als Formkörper vorliegen. In dem Verfahrensschritt 10 werden die alkylgruppenhaltigen Feststoffe durch Beaufschlagung mit einer Wärmequelle über ihren Schmelzpunkt erwärmt, so daß diese in eine Schmelze übergehen. Während des Verfahrensschrittes 10 können den alkylgruppenhaltigen Feststoffen Reaktanten, Hilfs- und/oder Zuschlagstoffe beigemischt werden. Diese Beimischung kann sowohl vor dem Aufschmelzen, während des Aufschmelzens oder nach dem Aufschmelzen erfolgen.

In einem nächsten Schritt 12 werden die für die Plasmabehandlung der Schmelze gewünschten Prozeßparameter und Prozeßgase eingestellt. Hierbei werden insbesondere die speziellen Kombinationen der Prozeßgase, das heißt, eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff, oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitliche Abfolge. So sind Varianten denkbar, in der erst mit einer niederen Frequenz, beispielsweise 13,56 MHz und anschließend mit einer höheren Frequenz, beispielsweise 2,45 Ghz, eine Plasmabehandlung durchgeführt wird. Darüber hinaus ist eine alternierende Zugabe der Prozeßgase, also des Inertgases, des Reaktionsgases und/oder eines Gemisches aus einem Reaktionsgas und einem Inertgas möglich. Weiterhin kann eine alternierende, gegebenenfalls auch gleichzeitige Zuschaltung verschieden hoher Frequenzen vorgegeben werden. Im übrigen wird der gewünschte Prozeßdruck, der beispielsweise im Bereich zwischen 0,1 mbar bis 2 mbar liegt, eingestellt. Während der Plasmabehandlung kann der Prozeßdruck verfahrensbedingten Schwankungen unterliegen. Weiterhin wird die Behandlungsdauer festgelegt, mit der die Plasmabehandlung der Schmelze erfolgt. Diese beträgt beispielsweise zwischen 5 Sekunden und 15.000 Sekunden. Die genannten Prozeßparameter beziehungsweise Prozeßgase können untereinander in beliebiger Zusammenstellung variiert werden und sind insbesondere auf die Zusammensetzung des jeweils konkret vorliegenden alkylgruppenhaltigen Feststoffes abgestimmt.

In einem nächsten Verfahrensschritt 14 erfolgt dann die Plasmabehandlung der Schmelze der alkylgruppenhaltigen Feststoffe mit den im Verfahrensschritt 12 eingestellten Prozeßparametern beziehungsweise Prozeßbedingungen. Hierbei ist es denkbar, daß während der Plasmabehandlung eine Veränderung und/oder Anpassung der Prozeßparameter, beispielsweise durch eine Regelung, erfolgen kann. Weiterhin kann während des Verfahrensschrittes 14 die Schmelze gemischt beziehungsweise verrührt werden. Hierdurch ist eine homogenere Durchmischung der Schmelze mit den über die Plasmabehandlung eingebauten reaktiven beziehungsweise nichtreaktiven Gruppen möglich. Darüber hinaus kann die Schmelze während der Plasmabehandlung temperiert werden, so daß ein Erstarren oder eine Änderung der Viskosität der Schmelze während der Plasmabehandlung vermieden wird. Durch gezielte Temperierung der Schmelze ist es jedoch auch möglich, die Viskosität während der Plasmabehandlung zu verändern, beispielsweise zu erhöhen oder zu erniedrigen, um so den Einbau der reaktiven beziehungsweise nichtreaktiven Gruppen über die Plasmabehandlung zu beeinflussen.

In einem nächsten Verfahrensschritt 16 wird die Schmelze weiterverarbeitet. Diese Weiterverarbeitung kann beispielsweise in einem Erstarren der Schmelze bestehen. Die dann vorliegenden, chemisch modifizierten alkylgruppenhaltigen Feststoffe können beispielsweise granuliert, zu bestimmten Formkörpern verpreßt oder anderweitig verarbeitet werden. Weiterhin ist denkbar, daß die chemisch modifizierte Schmelze vor der Erstarrung einer Weiterverarbeitung zugeführt wird. Dies kann beispielsweise mittels eines Extruders, einer Spritzgußmaschine, eines Schockkühlers, einer Mischanlage zur Herstellung von Lösungen, Dispersionen, Emulsionen, Compounds und/oder Blends, einer Imprägniervorrichtung, einer Sprüh- oder Spritzvorrichtung und/oder einer Vorrichtung zum Herstellen von Verbunden erfolgen. Durch die direkte Weiterverarbeitung der chemisch modifizierten Schmelze lassen sich sonst notwendige Zwischenschritte, beispielsweise das Erstarren und ein vor der weiteren Verarbeitung erforderliches Wiederaufschmelzen vermeiden. Im Rahmen der hier vorliegenden Beschreibung soll jedoch auf Einzelheiten einer Weiterverarbeitung der modifizierten Schmelze nicht näher eingegangen werden.

In der Figur 2 ist schematisch eine Anlage zur chemischen Modifizierung von alkylgruppenhaltigen Feststoffen gezeigt. Die Anlage ist allgemein mit 20 bezeichnet und stark vereinfacht dargestellt. Die Anlage 20 besitzt einen Reaktor 22, der wenigstens eine Einlaßöffnung 24 für die zu modifizierenden alkylgruppenhaltigen Feststoffe aufweist. Die Einlaßöffnung 24 kann auch zur Beigabe der Reaktanten, Hilfs- und/oder Zuschlagstoffe genutzt werden. Weiterhin besitzt der Reaktor 22 eine Einlaßöffnung 26 für Prozeßgase oder Plasmen. Die Einlaßöffnung 26 kann mehrere, hier nicht dargestellte, Teileinlässe besitzen, über die entweder ein Inertgas, ein Reaktionsgas und/oder ein Gemisch eines Inertgases und eines Reaktionsgases oder entsprechende Plasmen in den Reaktor 22 führbar sind. Weiterhin besitzt der Reaktor 22 einen Auslaß 28 für die behandelten alkylgruppenhaltigen Feststoffe. Der Reaktor 22 ist hermetisch abschließbar, so daß in einem Innenraum 30 des Reaktors 22 ein Vakuum erzeugbar ist, wobei hier auf Einzelheiten nicht weiter eingegangen werden soll. In den Innenraum 30 ragt eine Elektrode 32, die mit einem Generator 34 zur Mikrowellenplasmaanregung und einer Hochfrequenzeinspeisung 36 gekoppelt ist. Die Elektrode 32 kann aus mehreren Teilelektroden bestehen, wobei eine für die Mikrowellenplasmaanregung und eine für die Hochfrequenzeinspeisung ausgelegt sein kann. Die Form der Elektrode 32 kann beispielsweise stabförmig, kugelförmig, halbschalenförmig usw. sein. Weiterhin ist in dem Innenraum 30 eine Rühreinrichtung 38 angeordnet. Die Rühreinrichtung 38 ist lediglich optional vorhanden, so daß deren Vorhandensein für die erfindungsgemäße chemische Modifizierung nicht erforderlich ist. Darüber hinaus kann der Reaktor 22 beheizbar sein, entweder über seinen Außenmantel 40 oder über die Rühreinrichtung 38, die entsprechende Heizelemente aufweisen kann.

Die hier dargestellte Anordnung 20 ist lediglich beispielhaft und kann durch jede andere geeignete Anordnung ersetzt werden, mittels der eine Durchführung des erfindungsgemäßen Verfahrens erfolgen kann.

Die in Figur 2 gezeigte Anlage 20 übt folgende Funktion aus:

Über die Einlaßöffnung 24 wird der Reaktor 22 mit den alkylgruppenhaltigen Feststoffen beschickt. Nach einer ersten Verfahrensvariante befinden sich die alkylgruppenhaltigen Feststoffe noch in ihrem festen Zustand, so daß diese in den Reaktor 22 beispielsweise eingeschüttet werden. Die alkylgruppenhaltigen Feststoffe können hierbei beispielsweise als Granulat, Pulver oder auch als größere Formkörper vorliegen. Der Innenraum 30 des Reaktors 22 wird sodann mit einer Wärmeenergie beaufschlagt, beispielsweise mittels einer Erwärmung des Außenmantels 40. Durch diese Erwärmung werden die in den Innenraum 30 eingefüllten alkylgruppenhaltigen Feststoffe oberhalb ihres Schmelzpunktes erwärmt, so daß sich in dem Innenraum 30 eine Schmelze ergibt. Diese Schmelze kann mittels der Rühreinrichtung 38 verrührt werden.

Nach einer weiteren Verfahrensvariante wird auf die Rühreinrichtung 38 verzichtet, so daß sich die Schmelze innerhalb des Innenraumes 30 auf dem Boden des Reaktors 22 absetzt.

Nachdem die alkylgruppenhaltigen Feststoffe in ihre Schmelze überführt sind, wird mittels der Elektrode 32 unter gleichzeitiger Zufuhr eines Prozeßgases über die Einlaßöffnung 26, eine Plasmabehandlung der Schmelze durchgeführt. Die Elektrode 32 kann hierbei abwechselnd mit unterschiedlich hohen Frequenzen angeregt werden. Hierzu wird diese abwechselnd mit dem Generator 34 oder der Hochfrequenzeinspeisung 36 gekoppelt. Gegebenenfalls sind zwei Elektroden 32 vorhanden, wobei jeweils eine der Elektroden mit dem Generator 34 und die jeweils andere mit der Hochfrequenzeinspeisung 32 gekoppelt ist. Diese können nun alternierend zugeschaltet werden. Das über die Eintrittsöffnung 26 zugeführte Prozeßgas führt bekannterweise zum Entstehen eines Plasmas innerhalb des Innenraumes 30 des Reaktors 22. Je nach Zusammensetzung des Prozeßgases wird ein unterschiedliches Plasma erzeugt. Hierbei kann über die Einlaßöffnung 26 sowohl ein Inertgas, ein Reaktionsgas oder Gemisch eines Inertgases und eines Reaktionsgases oder entsprechende Plasmen dem Reaktor 22 zugeführt werden. Die Einlaßöffnung 26 ist so ausgelegt, daß über hier nicht näher zu betrachtende Stelleinrichtungen die Zufuhr des Inertgases und/oder des Reaktionsgases und/oder des Gemisches aus dem Inertgas und Reaktionsgas oder der entsprechenden Plasmen während der Plasmabehandlung variiert werden kann. Das heißt, für unterschiedlich lange Zeiträume sind unterschiedlich große Mengen des jeweils benötigten Prozeßgases oder der entsprechenden Plasmen dem Reaktor 22 zuführbar.

Nach Beendigung der Plasmabehandlung der Schmelze wird diese über die Auslaßöffnung 28 aus dem Reaktor 22 entfernt. Damit die Schmelze während der Plasmabehandlung und während des Ablassens nicht erstarrt, kann die Wärmezufuhr während der Plasmabehandlung fortgesetzt werden. Die aus der Auslaßöffnung 28 austretende Schmelze kann nunmehr einer weiteren Verarbeitung beziehungsweise Bearbeitung zugeführt werden. Im Rahmen der vorliegenden Beschreibung soll jedoch auf diese Möglichkeit nicht weiter eingegangen werden.

Nach einer zweiten Verfahrensvariante wird die Schmelze der alkylgruppenhaltigen Feststoffe außerhalb des Reaktors 22 erzeugt. Die Schmelze wird also extern in einer geeigneten Vorrichtung erzeugt und in diesem Zustand in den Innenraum 30 des Reaktors 22 eingefüllt. Der Reaktor 22 bedarf hierzu lediglich einer Wärmequelle, die geeignet ist, die Schmelze während der Bearbeitung soweit mit Wärmeenergie beaufschlagen zu können, daß diese eine Temperatur oberhalb ihres Schmelzpunktes behält.

Nach einer dritten Verfahrensvariante kann die Schmelze der alkylgruppenhaltigen Feststoffe separat in einem Behälter erzeugt werden, der dann durch eine geeignete Einlaßöffnung in den Reaktor 22 eingebracht wird. Nach erfolgter Plasmabehandlung der Schmelze kann dieser Behälter wiederum aus dem Reaktor 22 entnommen werden, so daß auf die Einlaßöffnung 24 und die Auslaßöffnung 28 verzichtet werden kann. Durch diese Variante ist der Aufbau des Reaktors 22 ausschließlich auf die Erzeugung des Plasmas optimierbar.

Nach einer weiteren Verfahrensweise ist es denkbar, den Reaktor 22 im Durchlaufprinzip zu betreiben. Das heißt, über die Einlaßöffnung 24 werden kontinuierlich alkylgruppenhaltige Feststoffe zugeführt, die je nach Ausstattung des Reaktors 22 bereits als Schmelze vorliegen oder innerhalb des Reaktors 22 in eine Schmelze überführt werden. Die dann vorliegende Schmelze wird innerhalb eines für die Plasmabehandlung ausgelegten Abschnittes des Reaktors 22 der Plasmabehandlung unterzogen und anschließend über die Auslaßöffnung 28 entnommen.

Die hier erläuterten unterschiedlichen Verfahrensvarianten zur Plasmabehandlung einer Schmelze sind lediglich beispielhaft. Es soll verdeutlicht werden, daß der konkrete Aufbau einer Anlage 20 zur Durchführung des erfindungsgemäßen Verfahrens sehr vielfältig sein kann. Entscheidend ist, daß die alkylgruppenhaltigen Feststoffe vor der Plasmabehandlung in eine Schmelze überführt werden. Die Anlage 20 ist lediglich auf die Zuführung der alkylgruppenhaltigen Feststoffe, entweder als Feststoff oder als Schmelze und die Abführung der behandelten Schmelze auszulegen.

In einem konkreten Beispiel wird bekanntes PE-Wachs 720 (Fa. HOECHST) als Pulver in eine Form gegeben. Die Höhe der Pulverschicht innerhalb der Form beträgt ca. 3 - 4 mm. Die Form wird dann in eine Erhitzungseinrichtung, beispielsweise einen Ofen, gegeben und dort auf Temperaturen von ca. 160 °C erhitzt. Hierdurch wird das PE-Wachs oberhalb seines Schmelzpunktes erwärmt. Die Form verbleibt so lange in dem Ofen, bis das PE-Wachs vollständig geschmolzen ist. Die Form mit dem in einer Schmelze vorliegenden PE-Wachs wird sodann in den Reaktor 22 gegeben, wobei dieser weder die Einlaßöffnung 24, die Auslaßöffnung 28 noch die Rühreinrichtung 38 besitzt.

Innerhalb des Reaktors 22 wird die Schmelze des PE-Wachses einer Plasmabehandlung mit folgenden Prozeßparametern unterzogen:

Es wird ein Prozeßdruck von 0,7 mbar eingestellt. Die Leistung der Hochfrequenzeinspeisung 36 beträgt 600 W, und die Leistung des Generators 34 zur Mikrowellenanregung beträgt 1200 W. Der Generator 34 erzeugt eine Frequenz von 2,45 GHz und die Hochfrequenzeinspeisung 36 eine Frequenz von 13,56 MHz. In den Innenraum 30 wird Argon als Inertgas zugeführt, wobei für eine Zeitdauer von 30 Sekunden eine Hochfrequenzanregung und für 30 Sekunden eine Mikrowellenanregung erfolgt. Sodann wird Sauerstoff als Reaktionsgas zugeführt und eine Plasmabehandlung für 60 Sekunden mit einer Hochfrequenzanregung und für 60 Sekunden mit einer Mikrowellenanregung durchgeführt. Anschließend wird als weiteres Reaktionsgas Stickstoff zugeführt und ebenfalls für 60 Sekunden eine Hochfrequenzanregung und für 60 Sekunden eine Mikrowellenanregung durchgeführt. Die gesamte Plasmabehandlung der Schmelze des PE-Wachses dauert somit 300 Sekunden.

Nach Beendigung der Plasmabehandlung wird die Schmelze aus dem Reaktor 22 entnommen und abgekühlt, so daß eine Wachsplatte entsteht. Diese Wachsplatte besitzt eine chemische Modifizierung gegenüber dem ursprünglichen PE-Wachs, die durch eine Strukturveränderung während der Plasmabehandlung bewirkt wurde. Durch die Behandlung mit den Prozeßgasplasmen (Inertgasplasma, Reaktionsgasplasma) wurden in die Schmelze sauerstoff- und stickstoffhaltige polare Gruppen eingebaut. Durch den Einbau der polaren Gruppen in die Wachsschmelze weist das PE-Wachs nach der Erstarrung eine Strukturveränderung auf.

Diese Strukturveränderung wirkt sich beispielsweise durch eine Veränderung der Oberflächenspannungswerte der entstandenen Wachsplatte aus. Durch Aufbringen von Testtinten konnte nachgewiesen werden, daß auf der Plattenoberseite Oberflächenspannungswerte zwischen ca. 28 mN/m und ca. 41 mN/m vorhanden sind, während auf der Unterseite Oberflächenspannungswerte zwischen ca. 32 mN/m und ca. 41 mN/m vorhanden sind. Der punktuelle Unterschied der Oberflächenspannungswerte auf der Oberseite und der Unterseite der behandelten Wachsplatte ergibt sich auf Grund einer fehlenden Durchmischung der Schmelze während der Plasmabehandlung. Die sich ergebenden punktuellen Unterschiede können - wie erwähnt - durch eine Mischung der Schmelze während der Plasmabehandlung minimiert werden.

## Patentansprüche

1. Verfahren zum chemischen Modifizieren von alkylgruppenhaltigen Feststoffen, **dadurch gekennzeichnet**, daß die alkylgruppenhaltigen Feststoffe auf Temperaturen oberhalb ihres Schmelzpunktes erwärmt und einer Plasmabehandlung in einem Frequenzbereich von 10 kHz bis 10 GHz unterzogen werden.

2. Verfahren nach Anspruch 1, **dadurch gekennzeichnet**, daß die Plasmabehandlung mit einer konstanten Frequenz durchgeführt wird.

3. Verfahren nach einem der vorhergehenden Ansprüche, **dadurch gekennzeichnet**, daß die Plasmabehandlung mit wechselnden Frequenzen durchgeführt wird.

4. Verfahren nach einem der vorhergehenden Ansprüche, **dadurch gekennzeichnet**, daß die Plasmabehandlung mit Kombinationen verschieden hoher, wechselnder Frequenzen durchgeführt wird.

5. Verfahren nach einem der vorhergehenden Ansprüche, **dadurch gekennzeichnet**, daß die Plasmabehandlung unter Zufuhr mindestens eines Inertgases, beispielsweise Helium und/oder Argon, durchgeführt wird.

6. Verfahren nach einem der vorhergehenden Ansprüche, **dadurch gekennzeichnet**, daß die Plasmabehandlung unter Zufuhr mindestens eines Reaktionsgases, beispielsweise Sauerstoff und/oder Stickstoff und/oder Monomeren durchgeführt wird.

7. Verfahren nach einem der vorhergehenden Ansprüche, **dadurch gekennzeichnet**, daß die Plasmabehandlung nacheinander mit wenigstens einem Inertgasplasma, wenigstens einem Reaktionsgasplasma oder einem Reaktionsgasgemischplasma oder unter Zufuhr eines Gemisches aus wenigstens einem Inertgas und wenigstens einem Reaktionsgas zugeführt wird.

8. Verfahren nach einem der vorhergehenden Ansprüche, **gekennzeichnet durch** eine alternierende Plasmabehandlung mit wenigstens einem Inertgasplasma, wenigstens einem Reaktionsgasplasma und wenigstens einem Gemisch eines Inertgas-Reaktionsgas-Plasmas.

9. Verfahren nach einem der vorhergehenden Ansprüche, **dadurch gekennzeichnet**, daß den alkylgruppenhaltigen Feststoffen und/oder den geschmolzenen alkylgruppenhaltigen Feststoffen vor und/oder während und/oder nach der Plasmabehandlung feste und/oder flüssige Reaktanten, Hilfs- und Zuschlagstoffe beigemischt werden.

10. Verfahren nach einem der vorhergehenden Ansprüche, **dadurch gekennzeichnet**, daß vor und/oder während und/oder nach der Plasmabehandlung eine Compoundierung vorgenommen wird.

11. Verfahren nach einem der vorhergehenden Ansprüche, **dadurch gekennzeichnet**, daß vor und/oder während und/oder nach der Plasmabehandlung ein Blending vorgenommen wird.

12. Verfahren nach einem der vorhergehenden Ansprüche, **dadurch gekennzeichnet**, daß die Plasmabehandlung bei einem Prozeßdruck von 0,1 mbar bis 2 mbar erfolgt.

13. Verfahren nach einem der vorhergehenden Ansprüche, **dadurch gekennzeichnet**, daß die Dauer der Plasmabehandlung zwischen 5 Sekunden und 15.000 Sekunden beträgt.

14. Verfahren nach einem der vohergehenden Ansprüche, **dadurch gekennzeichnet**, daß die Überführung der alkylgruppenhaltigen Feststoffe in die Schmelze vor der Plasmabehandlung erfolgt.

15. Verfahren nach einem der vorhergehenden Ansprüche, **dadurch gekennzeichnet**, daß die Überführung der alkylgruppenhaltigen Feststoffe in die Schmelze während der Plasmabehandlung erfolgt.

16. Verfahren nach einem der vorhergehenden Ansprüche, **dadurch gekennzeichnet**, daß die alkylgruppenhaltigen Feststoffe in eine Schmelze unterschiedlicher Viskosität überführt werden.

17. Verfahren nach einem der vorhergehenden Ansprüche, **dadurch gekennzeichnet**, daß die in die Schmelze überführten alkylgruppenhaltigen Feststoffe während der Plasmabehandlung gemischt/verrührt werden.

18. Chemisch modifizierte alkylgruppenhaltige Feststoffe, erhältlich durch eine Plasmabehandlung einer Schmelze der alkylgruppenhaltigen Feststoffe, insbesondere nach einem der Ansprüche 1 bis 17.

## Claims

1. A process for chemically modifying solids containing alkyl groups, **characterized in that** the solids containing alkyl groups are heated to temperatures above their melting point and are subjected to a plasma treatment in a frequency range of from 10 kHz to 10 GHz.

2. A process according to Claim 1, **characterized in that** the plasma treatment is carried out at a constant frequency.

3. A process according to one of the preceding Claims, **characterized in that** the plasma treatment is carried out at varying frequencies.

4. A process according to one of the preceding Claims, **characterized in that** the plasma treatment is carried out with combinations of varying frequencies of different levels.

5. A process according to one of the preceding Claims, **characterized in that** the plasma treatment is carried out while at least one inert gas, for example helium and/or argon, is supplied.

6. A process according to one of the preceding Claims, **characterized in that** the plasma treatment is carried out while at least one reaction gas, for example oxygen and/or nitrogen and/or monomers, is supplied.

7. A process according to one of the preceding Claims, **characterized in that** the plasma treatment is [carried out] successively with at least one inert-gas plasma, at least one reaction-gas plasma or a mixed reaction-gas plasma or while a mixture of at least one inert gas and at least one reaction gas is supplied.

8. A process according to one of the preceding Claims, **characterized by** an alternating plasma treatment with at least one inert-gas plasma, at least one reaction-gas plasma and at least one mixture of an inert-gas/reaction-gas plasma.

9. A process according to one of the preceding Claims, **characterized in that** solid and/or liquid reagents, auxiliary agents and additives are admixed with the solids containing alkyl groups and/or the melted solids containing alkyl groups before and/or during and/or after the plasma treatment.

10. A process according to one of the preceding Claims, **characterized in that** a compounding is carried out before and/or during and/or after the plasma treatment.

11. A process according to one of the preceding Claims, **characterized in that** a blending is carried out before and/or during and/or after the plasma treatment.

12. A process according to one of the preceding Claims, **characterized in that** the plasma treatment is carried out at a process pressure of from 0·1 mbar to 2 mbar.

13. A process according to one of the preceding Claims, **characterized in that** the duration of the plasma treatment is between 5 seconds and 15,000 seconds.

14. A process according to one of the preceding Claims, **characterized in that** the solids containing alkyl groups are conveyed into the melt before the plasma treatment.

15. A process according to one of the preceding Claims, **characterized in that** the solids containing alkyl groups are conveyed into the melt during the plasma treatment.

16. A process according to one of the preceding Claims, **characterized in that** the solids containing alkyl groups are conveyed into a melt of varying viscosity.

17. A process according to one of the preceding Claims, **characterized in that** the solids containing alkyl groups and conveyed into the melt are mixed/stirred during the plasma treatment.

18. Chemically modified solids containing alkyl groups, obtainable by plasma treatment of a melt of the solids containing alkyl groups, in particular according to one of Claims 1 to 17.

## Revendications

1. Procédé de modification chimique de solides contenant des groupes alkyles, procédé caractérisé en ce qu'on chauffe les solides, contenant des groupes alkyles, à des températures supérieures à leur point de fusion et on les soumet à un traitement par du plasma dans un domaine des fréquences de 10 kHz à 10GHz.

2. Procédé selon la revendication 1, caractérisé en ce que le traitement par du plasma est effectué à une fréquence constante.

3. Procédé selon l'une des revendications précédentes, caractérisé en ce que le traitement par du plasma est effectué à des fréquences variables.

4. Procédé selon l'une des revendications précédentes, caractérisé en ce que le traitement par du plasma est effectué à l'aide d'une combinaison de différentes fréquences élevées variables.

5. Procédé selon l'une des revendications précédentes, caractérisé en ce que le traitement par du plasma est effectué avec acheminement d'arrivée d'au moins un gaz inerte, par exemple l'hélium et/ou l'argon.

6. Procédé selon l'une des revendications précédentes, caractérisé en ce que le traitement par du plasma est effectué avec acheminement d'arrivée d'au moins un gaz de réaction, ou réactif, par exemple l'oxygène et/ou l'azote et/ou des monomères.

7. Procédé selon l'une des revendications précédentes, caractérisé en ce que le traitement par du plasma est réalisé avec acheminement d'arrivée d'au moins un plasma de gaz inerte, au moins un plasma de gaz de réaction ou réactif ou un plasma d'un mélange de gaz de réaction ou avec acheminement d'un mélange d'au moins un gaz inerte et d'au moins un gaz de réaction ou réactif.

8. Procédé selon l'une des revendications précédentes, caractérisé par un traitement alterné par des plasmas à l'aide d'au moins un plasma de gaz inerte, au moins un plasma de gaz de réaction ou réactif et au moins un mélange d'un plasma de gaz inerte et d'un plasma de gaz de réaction ou réactif.

9. Procédé selon l'une des revendications précédentes, caractérisé en ce qu'on incorpore par mélangeage aux solides contenant des groupes alkyles et/ou aux solides fondus contenant des groupes alkyles, avant et/ou pendant et/ou après le traitement par du plasma, des corps réactifs et solides et/ou liquides, des adjuvants et/ou des additifs.

10. Procédé selon l'une des revendications précédentes, caractérisé en ce qu'avant et/ou pendant et/ou après le traitement par du plasma, on entreprend une opération de 〈〈 compounding avec formation d'une composition ou d'un produit composite.

11. Procédé selon l'une des revendications précédentes, caractérisé en ce qu'avant et/ou pendant et/ou après le traitement par du plasma, on entreprend une opération de mélangeage.

12. Procédé selon l'une des revendications précédentes, caractérisé en ce que le traitement par du plasma est effectué à une pression opératoire de 0,1 mbar à 2 mbars.

13. Procédé selon l'une des revendications précédentes, caractérisé en ce que la durée du traitement par le plasma se situe entre 5 secondes et 15 000 secondes.

14. Procédé selon l'une des revendications précédentes, caractérisé en ce que la transformation de solides, contenant des groupes alkyles, en la masse fondue a lieu avant le traitement par du plasma.

15. Procédé selon l'une des revendications précédentes, caractérisé en ce que la transformation des solides, contenant des groupes alkyles, en la masse fondue a lieu pendant le traitement par le plasma.

16. Procédé selon l'une des revendications précédentes, caractérisé en ce que les solides, contenant des groupes alkyles, sont transformés an une masse fondue ayant une viscosité différente.

17. Procédé selon l'une des revendications précédentes, caractérisé en ce que les solides contenant des groupes alkyles, transformés en la masse fondue, sont soumis à mélangeage/agitation pendant le traitement par le plasma.

18. Solides contenant des groupes alkyles, chimiquement modifiés, que l'on peut obtenir par un traitement par du plasma d'une masse fondue des solides contenant des groupes alkyles, en opérant notamment selon l'une des revendications 1 à 17.
